# EUROPÄISCHE PATENTANMELDUNG

(11) **EP 1 127 737 A1**
(43) Veröffentlichungstag der Anmeldung: **29.08.2001**
(21) Anmeldenummer: 01104701.6
(22) Anmeldetag: 26.02.2001
(51) Int. Cl.: B60N 2/56

(54) **Einrichtung zur Belüftung eines Fahrzeugsitzes**

(30) Priorität: 26.02.2000 DE 10009128
(71) Anmelder: W.E.T. AUTOMOTIVE SYSTEMS AG, 85235 Odelzhausen (DE)
(72) Erfinder: Stöwe, Stefan, Dr., 86415 Mering (DE); Pietsch, Matthias, Dipl.-Ing., 38154 Königslutter (DE); Michniacki, Matthias, Dr., 38440 Wolfsburg (DE)

(57) **Zusammenfassung**

Es wird eine Einrichtung zur Belüftung eines Fahrzeugsitzes mit wenigstens einem im Fahrzeugsitz angeordneten Lüfter (4) vorgeschlagen, der von einer zentralen Sitzsteuerung (1) gesteuert wird. Zur Steuerung des Lüfters (4) werden von der zentralen Sitzsteuerung (1) Steuersignale über eine Datenleitung (2) zu einer im Lüftergehäuse (5) angeordneten Steuerelektronik (3) übertragen. An die Datenleitung (2) kann problemlos eine den jeweiligen Anforderungen entsprechende Anzahl von Lüftern angeschlossen werden.

## Beschreibung

Die Erfindung betrifft eine Einrichtung zur Belüftung eines Fahrzeugsitzes gemäß Oberbegriff des Anspruches 1.

Belüftete Fahrzeugsitze dienen der Verbesserung des Sitzkomforts. Mittels einem oder mehreren im Fahrzeugsitz angeordneten Lüfter kann eine optimale Temperaturverteilung innerhalb des Fahrzeugsitzes erreicht werden, wobei auch durch Belüftung eine Sitzüberhitzung aufgrund von direkter Sonneneinstrahlung vermieden werden kann.

Aus der DE 196 28 698 C1 ist ein Fahrzeugsitz mit einer Ventilationsschicht auf der Polsterauflage des Fahrzeugsitzes ausgestattet. Zum Belüften der Ventilationsschicht ist eine Vielzahl von in der Polsterauflage integrierten, elektrisch angetriebenen Miniaturlüftem vorgesehen, die vom Sitzbenutzer ein- und ausgeschaltet werden können.

Aus der DE 197 03 516 C1 ist ein Fahrzeugsitz mit einem zentralen Steuergerät für die Betätigung von im Fahrzeugsitz angeordneten Lüftem bekannt. Das zentrale Steuergerät arbeitet in Abhängigkeit von der Polsteroberflächentemperatur, um die Lüfter auf die jeweilige geeignete Leistungsstufe umzuschalten.

Der Erfindung liegt die Aufgabe zugrunde eine Einrichtung zur Belüftung eines Fahrzeugsitzes zu schaffen, die einen möglichst einfachen und störungsfreien Anschluß der in einem Fahrzeugsitz angeordneten Lüfter an eine zentrale Sitzsteuerung ermöglicht.

Die Lösung dieser Aufgabe erhält man durch die im Anspruch 1 angegebenen Merkmale. Jeder der im Fahrzeugsitz angeordneten Lüfter hat eine eigene am Lüfter angeordnete Steuerelektronik, die über eine Steuersignale übertragende Datenleitung mit der zentralen Sitzsteuerung verbunden ist. Die zum Antrieb des Lüfters erforderlichen Leistungsströme werden direkt in der am Lüfter angeordneten Steuerelektronik geregelt. Die am Lüfter angeordnete Steuerelektronik läßt sich daher auf sehr einfache Weise elektromagnetisch abschirmen, nämlich vorzugsweise dadurch, daß die Steuerelektronik in einem metallischen oder metallisierten Lüftergehäuse angeordnet ist. Die zu den Lüftern führende Datenleitung wird nur mit sehr niedrigen Strömen belastet, weshalb von der Datenleitung keine nennenswerten Störfelder ausgehen. Außerdem hat die erfindungsgemäße Einrichtung den Vorteil, daß an die Datenleitung den jeweiligen Anforderungen entsprechend mehr oder weniger Lüfter angeschlossen werden können, deren jeweils zugeordnete Steuerelektronik über die Datenleitung adressierbar ist.

Ein weiterer Vorteil der erfindungsgemäßen Einrichtung besteht darin, daß die Grundausstattung eines Fahrzeugs eine zentrale Sitzsteuerung haben kann, die für den Anschluß einer zu Lüftem führenden Datenleitung vorbereitet ist. Die Grundausstattung des Fahrzeugs läßt sich dann problemlos in der Weise erweitern, daß in den Fahrersitz oder auch in weitere Fahrzeugsitze Lüfter eingebaut werden, deren jeweils zugeordnete Steuerelektronik über eine Datenleitung nur noch mit der zentralen Sitzsteuerung verbunden werden müssen. Jeder Lüfter mit Steuerelektronik muß dann lediglich noch an die Bordnetzspannung angeschlossen werden.

Die am Lüfter angeordnete Steuerelektronik kann jeweils als serielle Schnittstelle zwischen Lüfterantrieb und zentraler Sitzsteuerung dienen.

Die Datenleitung zwischen der zentralen Sitzsteuerung und der Steuerelektronik ist vorzugsweise als bidirektionaler Datenbus ausgebildet, der somit nicht nur Steuersignale zur Steuerelektronik des Lüfters übertragen kann, sondern auch Betriebszustandsdaten und Daten über die Temperatur der transportierten Luft zur zentralen Sitzsteuerung übermitteln kann. Die zentrale Sitzsteuerung kann anhand der erhaltenen Daten den jeweiligen Lüfter steuern oder eine Fehlerdiagnose für den jeweiligen Lüfter vornehmen.

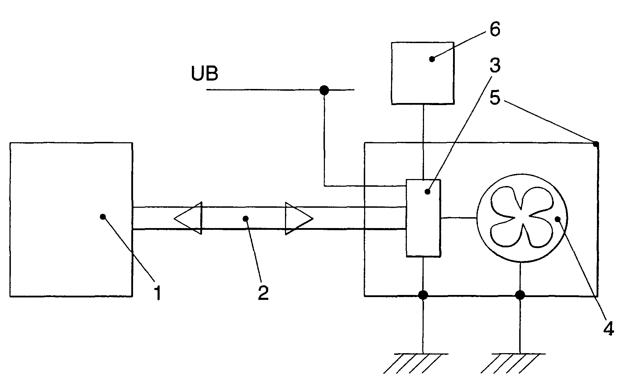

Die Erfindung wird nachfolgend anhand eines in der Zeichnung dargestellten Ausführungsbeispiels näher erläutert. In der Zeichnung ist ein Blockschaltbild einer Einrichtung zur Belüftung eines Fahrzeugsitzes angegeben, welches eine zentrale Sitzsteuerung und einen Lüfter mit im Lüftergehäuse angeordneter Steuerelektronik umfaßt.

Die zentrale Sitzsteuerung 1 ist über eine bidirektionale Datenleitung 2 mit der Steuerelektronik 3 verbunden, die ausgangsseitig den Antrieb des Lüfters 4 betätigt. Ein metallisches Lüftergehäuse 5 schirmt die Steuerelektronik 3 und den Lüfter 4 elektromagnetisch ab.

Die Steuerelektronik 3 erhält ihre Spannungsversorgung über die Bordnetzspannung UB. Über die Datenleitung 2 werden Steuersignale mit sehr geringen Stromwerten übertragen, so daß von der Datenleitung 2 keine unerwünschten Störfelder ausgehen.

Die Steuerelektronik 3 bildet eine Schnittstelle zwischen dem Antrieb des Lüfters 4 und der zentralen Sitzsteuerung 1 und kann Temperaturdaten eines Thermofühlers 6 sowie weitere Betriebszustandsdaten zum zentralen Sitzsteuergerät 1 übertragen. Im Sitzsteuergerät 1 kann anhand der empfangenen Betriebszustandsdaten eine Optimierung des Lüfterbetriebs und die Durchführung eine Fehlerdiagnose erfolgen.

### BEZUGSZEICHENLISTE

- 1: Sitzheizung
- 2: Datenleitung
- 3: Steuerelektronik
- 4: Lüfter
- 5: Lüftergehäuse
- 6: Thermofühler
- UB: Bordnetzspannung

## Patentansprüche

1. Einrichtung zur Belüftung eine Fahrzeugsitzes mit wenigstens einem im Fahrzeugsitz angeordneten Lüfter (4), der von einer zentralen Sitzsteuerung (1) gesteuert wird, **dadurch gekennzeichnet**, daß am Lüfter (4) eine den Lüfter (4) betätigende Steuerelektronik (3) angeordnet ist, die über eine Steuersignale übertragende Datenleitung (2) mit der zentralen Sitzsteuerung (1) verbunden ist.

2. Einrichtung nach Anspruch 1, **dadurch gekennzeichnet**, daß die Steuerelektronik (3) eine serielle Schnittstelle zwischen dem Antrieb des Lüfters (4) und der zentralen Sitzsteuerung (1) bildet.

3. Einrichtung nach einem der Ansprüche 1 oder 2, **dadurch gekennzeichnet**, daß die Datenleitung (2) als bidirektionaler Datenbus ausgebildet ist, der einerseits von der zentralen Sitzsteuerung (1) Steuerdaten zum Lüfter (4) und andererseits vom Lüfter (4) oder der Lüfterumgebung Betriebszustandsdaten zur zentralen Sitzsteuerung (1) überträgt.

4. Einrichtung nach einem der vorhergehenden Ansprüche, **dadurch gekennzeichnet**, daß die Steuerelektronik (3) im Lüftergehäuse (5) elektromagnetisch abgeschirmt angeordnet ist.
